# EUROPÄISCHE PATENTSCHRIFT

(11) **EP 2 042 957 B1**
(45) Veröffentlichungstag und Bekanntmachung des Hinweises auf die Patenterteilung: **01.08.2018**
(21) Anmeldenummer: 08164067.4
(22) Anmeldetag: 10.09.2008
(51) Int. Cl.: G05B 19/418, G05B 19/042, G06F 1/14

(54) **Verfahren zur automatischen Zeitsynchronisation von Geräten in netzbasierten Systemen**
Method for automatic time synchronisation of devices in network-based systems
Système pour la synchronisation automatique des dispositifs dans un réseau

(30) Priorität: 26.09.2007 US 975320 P
(43) Veröffentlichungstag der Anmeldung: 01.04.2009
(73) Patentinhaber: VEGA Grieshaber KG, 77709 Wolfach (DE)
(72) Erfinder: Faist, Fridolin, 77709, Oberwolfach (DE)
(74) Vertreter: Maiwald Patent- und Rechtsanwaltsgesellschaft mbH

(56) Entgegenhaltungen:
- EP-A1- 1 430 627
- EP-A2- 1 215 559
- DE-A1-102004 050 386
- US-A1- 2002 018 402
- US-A1- 2003 103 486

## Beschreibung

### Gebiet der Erfindung

Die vorliegende Erfindung betrifft ein Verfahren zur automatischen Zeitsynchronisation von Feldgeräten in netzbasierten Systemen, ein netzbasiertes Messsystem zur automatischen Zeitsynchronisation, ein Computerprogramm zur automatischen Zeitsynchronisation von Feldgeräten, ein Speichermedium, auf welchem ein Computerprogramm zur automatischen Zeitsynchronisation von Feldgeräten gespeichert ist sowie ein Mikroprozessor mit einem solchen Computerprogramm.

### Technischer Hintergrund

Möchte man ein Gerätenetzwerk, welches sich global sehr weit erstrecken kann, dahingehend nutzen, dass zeitkritische Daten der verteilten Geräte zentral verglichen und gespeichert werden sollen, so ist eine einheitliche Zeitbasis unerlässlich. Handelt es sich dabei um Geräte-/Serversysteme mit Servern, die von ihren Geräten Messwert- und Geräteinformationen mit Zeitstempelinformationen entgegennehmen und archivieren sollen, so ist diese einheitliche Zeitbasis also dringend erforderlich. Insbesondere wenn die Geräte bzw. Clients Informationen wie Messwertinformationen über einen längeren Zeitraum sammeln und zu einem geeigneten Zeitpunkt blockweise an den Server leiten sollen.

Typischerweise wird heute für das automatisierte Synchronisieren einer weltweit einheitlichen Zeitbasis von Computern, die Zugriff auf das Internet haben, zyklisch ein so genannter Time Server kontaktiert. Ein Time Server wird üblicherweise von einem hochgenauen Uhrzeitgeber oder von mehreren anderen Time Servern synchronisiert.

Damit dieses Verfahren funktioniert, sollte jeder Computer, der diesen Dienst nutzen möchte, eigens zur Nutzung eines Time Servers eingerichtet werden. Dies wird händisch vor Ort bei jedem einzelnen Gerät durchgeführt und kann bei einer weltweiten Verteilung der Geräte einen erheblichen Arbeitsaufwand mit einem erheblichen Potential an Fehlerquellen hinsichtlich einer einheitlichen Zeitbasis bedeuten. Möchte man nun aber diese Möglichkeit für Steuerungen oder Feldgeräte aus dem Bereich der Prozessautomatisierung nutzen, so muss man feststellen, dass das Inbetriebnahmepersonal oft mit diesen nötigen Einstellungen und Systemen überfordert ist, da es nicht über das notwendige Know-how verfügt. Ebenso ist diese Vorgehensweise aufwändig und es ist nicht sichergestellt, dass während des laufenden Betriebes eine Fehlbedienung erfolgt, wodurch die Zeitbasis verstellt wird oder der eingestellte Time Server nicht mehr erreichbar ist. Weiterhin kann es über Jahre hinweg zu einem Zeitdrift in den verwendeten Uhren kommen, da die zeitliche Präzision von Uhren stets technisch begrenzt ist. Ferner sind bisherige Verfahren nur optional einzurichten; bei menschlichem Versagen oder Vergessen durch das Inbetriebnahmepersonal beim Einrichten des Time Servers sind die Zeitinformationen der Messwertinformationen nicht brauchbar und nicht vergleichbar.

DE 10 2004 050 386 A1 beschreibt eine Einrichtung zur Analyse eines technischen Prozesses. Dabei weisen Mess- und Bilderfassungseinrichtungen gemeinsame oder jeweils eigene Zeitgeber auf. Ferner weist eine zentrale Erfassungs- und Auswerteeinheit einen Referenzzeitgeber auf, dessen Uhrzeit als Referenzzeit für die Zeitgeber der Mess- und Bilderfassungseinrichtungen verwendet wird. Bei einer Synchronisation werden die Zeiten der Zeitgeber der Mess- und Bilderfassungseinrichtungen an die Referenzzeit des Referenzzeitgebers angepasst.

EP 1 215 559 A2 beschreibt ein Verfahren zur Synchronisation eines Zeitgebers einer Klient-Station über ein Kommunikationsnetzwerk. Eine Vielzahl von Datenpaketen wird dazu von einem Zeitserver an die Client-Station übertragen. Bei Empfang dieser Datenpakete wird die lokale Empfangszeit bestimmt, woraufhin die Datenpakete zurückgeschickt werden. Anschließend werden Daten für eine Umlaufzeitverzögerung der Pakete bestimmt. Auf Basis dieser Daten wird dann eine Zeitsynchronisation durchgeführt.

### Darstellung der Erfindung

Es ist eine Aufgabe der vorliegenden Erfindung, eine vereinfachte Synchronisation der Zeitbasis von weltweit verteilten Feldgeräten oder Feldgerätesteuerungen in der Prozessautomation mittels eines Zeitservers bereitzustellen.

Im folgenden Text werden für den Begriff Feldgerät gleichbedeutend die Begriffe Client, Messgerät oder Auswertgerät verwendet, wobei sich alle Ausführungsbeispiele der vorliegenden Erfindung immer auch auf eine Mehrzahl von Feldgeräten und Feldgerätesteuerungen beziehen können. Letztlich ist die vorliegende Erfindung für jedes technische Gerät möglich, welches Daten erfassen kann und eine Uhr aufweist.

Gemäß einem Ausführungsbeispiel der vorliegenden Erfindung ist ein Verfahren basierend auf einem Kommunikations- und Datennetz zur automatischen Zeitsynchronisation von Feldgeräten, nämlich Füllstandsmessgeräten, Druckmessgeräten sowie Feldgerätesteuerungen angegeben. Dabei wird ein aktueller Zeitwert durch das Feldgerät oder die

Feldgerätesteuerung bestimmt, und es wird durch, in einem oder an einen zentralen Server ein Sollwert bereitgestellt. Neben dem Vergleich des aktuellen Zeitwerts mit dem Sollwert wird in dem Verfahren der aktuelle Zeitwert auf den Sollwert eingestellt, wenn der Sollwert vom aktuellen Zeitwert um mehr als einen vorgegebenen Schwellwert abweicht.

Um eine gesicherte und automatisierte Synchronisation der Zeitbasis von weltweit verteilten Steuerungen und Feldgeräten zu erreichen, wird also die Zeit eines Feldgerätes an einem beliebigen Ort zentral durch den Server kontrolliert und ggf. synchronisiert. Dies geschieht automatisch, da sowohl bei einer Kommunikation, die durch das Feldgerät initiiert ist, als auch bei einer Kommunikation, die durch den Server initiiert ist, jeweils die Kommunikation zur Zeitsynchronisation mehr oder weniger regelmäßig angestoßen wird. Somit entspricht das Aktivieren des gesamten Verfahrens innerhalb des Auswertegerätes oder innerhalb des Servers dem Durchführen einer Bediensoftware.

Dabei entspricht dem Vorgang des Bestimmens eines aktuellen Zeitwertes das Erzeugen von so genannten Zeitvergleichsdaten durch zumindest ein Feldgerät. Durch das erfindungsgemäße Verfahren kann also automatisiert sichergestellt werden, dass in einstellbarer Regelmäßigkeit, die beispielsweise durch den Benutzer vordefiniert werden kann, eine einheitliche Zeitbasis bei dem Server und dem Feldgerät vorliegt. Da die Feldgeräte werkseitig bzw. serverseitig zentral auf ihre jeweilige Zeitzone eingestellt werden und der Server weiß, in welcher Zeitzone sich das Gerät befindet, können somit zentral Daten, die zeitkritisch sind (Daten, bei denen die Erfassungszeit eine wichtige Rolle spielt), von weltweit verteilten Feldgeräten verglichen und bei Bedarf kombiniert werden. Dabei kann durch den Server sichergestellt werden, dass eine korrekte Umrechnung der aktuellen Tageszeit eines Feldgerätes auf die Werks- bzw. Serverzeitzone durchgeführt wird. Dadurch können alle oben genannten Fehlerpotenziale für den Vergleich von weltweit erzeugten zeitkritischen Messwertdaten vermieden bzw. reduziert werden und es wird einem natürlichen Zeitdrift jedes einzelnen Feldgerätes entgegengewirkt. Da sowohl die Serverseite als auch die Feldgeräte bzw. die Feldgerätesteuerungen zur Kontaktaufnahme des jeweiligen Gegenübers eingerichtet sind, kann die Kommunikation zur Zeitsynchronisation von beiden Seiten initiiert werden.

Um die Zeitsynchronisation zu ermöglichen, basiert das erfindungsgemäße Verfahren auf ein Daten- und Kommunikationsnetz bzw. der Server, die Feldgeräte und die

Feldgerätesteuerungen sind in dieses Netz eingebunden. Solche Daten- und Kommunikationsnetze sind z.B. netzbasiert, internetbasiert, webbasiert, netzwerkbasiert, oder auf ein browsergestütztes Netzwerk basiert.

Neben der Kontrolle und der Korrektur der aktuellen Zeit eines Feldgerätes bzw. einer Feldgerätesteuerung kann durch das Verfahren auch eine serverseitige Kontrolle und Korrektur der Zeitzonen in dem jeweiligen Feldgerät bzw. in der jeweiligen Steuerung gegeben sein. Durch diese duale Kontrolle seitens des Servers über die global verteilten externen Geräte wird die Einhaltung der Synchronität aller beteiligten externen Geräte zueinander und zu dem Server mit Berücksichtigung respektiver Zeitzonen gewährleistet.

Dieses Verfahren kann dazu auch beinhalten, dass das Feldgerät von dem Server mittels der Kommunikationsverbindung zu einem Uhrenvergleich aufgefordert wird. In der später folgenden Figurenbeschreibung wird eine dann folgende Prozesskette beschrieben, die durch solch ein Auffordern des Servers ausgelöst wird.

Um die Sicherheit des erfindungsgemäßen Verfahrens zu erhöhen, ist gemäß einem Ausführungsbeispiel der vorliegenden Erfindung bei jeder Übertragung zwischen dem Server und dem Feldgerät und zwischen dem Feldgerät und dem Server eine Übermittlung der Zeitinformation vorgeschrieben und durch das Verfahren gewährleistet.

Es wird somit der Vorgang der Zeitsynchronisation innerhalb des normalen Betriebes und innerhalb des meist permanent ablaufenden Prozesses des Gerätes implementiert.

Dabei ist von besonderer Wichtigkeit, dass der aktuelle Zeitwert im Feldgerät umgestellt bzw. angepasst wird, da dieses Feldgerät durch das erfindungsgemäße Verfahren synchron zum Server und damit synchron zu allen anderen Feldgeräten in dem Verbund gehalten werden soll.

Die im Folgenden dargestellten Ausführungsbeispiele des Verfahrens können von dem erfindungsgemäßen Meßsystem, dem Computerprogramm und dem Mikroprozessor ausgeführt werden, oder auf dem Speichermedium gespeichert sein.

Erfindungsgemäß weist das Verfahren den Schritt Übernehmen von Daten von dem Feldgerät oder der Feldgerätesteuerung durch den Server in eine Datenbank auf. Dabei wird dieser Schritt nur vollzogen, wenn der Sollwert vom aktuellen Zeitwert höchstens um den vorgegebenen Schwellwert abweicht.

Das erfindungsgemäße Verfahren stellt also sicher, dass eine Übernahme von Daten des Feldgerätes durch den Server nur nach einer Sicherstellung gleicher Zeiten und einer gleichen Zeitbasis in dem Server und dem Feldgerät möglich ist. Sollten danach also beliebige Kombinationen der auf dem Server gespeicherten Daten zur Visualisierung oder Weiterverarbeitung benutzt werden, kann der Benutzer sicher sein, dass auch Daten, die von weltweit unterschiedlichen Standorten an den Server übertragen und dort gespeichert wurden, zeitlich in der gewünschten Genauigkeit miteinander verglichen werden können. Somit ist also die Weitergabe von gespeicherten Daten durch den Server an übergeordnete verarbeitende Instanzen oder verarbeitende Tools hinsichtlich der Zeitinformationen, die zu den jeweiligen Daten gehören, unkritisch. Der Server dient somit zur zentralen Verteilung von Zeitinformation an die Feldgeräte und die Feldgerätesteuerungen und steht somit einem bisher händisch durchgeführten Zeitmanagement von Feldgeräten am jeweiligen Geräteort als vorteilhafte Alternative zur Verfügung.

Dabei können die Daten im beliebigen Dateiformat, also beispielsweise in einem XML-Dateiformat, vorliegen. Es stellt weiterhin das Daten- und Kommunikationsnetz die Datenübertragung, also auch die Übertragung einzelner Dateien sowie die blockweise Übertragung der Dateien für die Synchronisation sicher.

Gemäß einem weiteren Ausführungsbeispiel der vorliegenden Erfindung erfolgt durch das Verfahren das Versenden des aktuellen Zeitwerts durch das Feldgerät an den Server und das Bestimmen des Zeitunterschieds zwischen dem aktuellen Zeitwert und dem Sollwert.

Die Feldgeräte liefern somit Zeitinformationen, die beispielsweise in der XML-Struktur <Device> vorliegen können, um die aktuelle Uhrzeit im Auswertgerät, also zum Zeitpunkt des Datenaustauschs, mit dem Server zu liefern. Der aktuelle Zeitwert bzw. diese Zeitinformation bzw. diese Zeitvergleichsdaten können in jedem beliebigen Dateiformat erstellt und übertragen werden, solange damit der Vergleich auf dem Server mit dem Sollwert erfolgen kann. Diese Zeitvergleichsdaten enthalten neben dem Gerätenamen, dem Gerätetyp, der Version, der Seriennummer, der IP-Adresse des Geräts auch die wesentliche aktuelle Zeit des Feldgerätes am Ort des Feldgerätes samt Datum. Das Element "Device" der XML-Messwertdaten enthält beispielsweise folgende Daten: <Device tag = "My MET", type = "VEGA Scan 693", version = "1.75/12", serial = "11111111", IP Address = "172.16.40.4", Time = "2006-07-26, 10:38:38 Uhr">. Diese Zeitvergleichsdaten oder das XML-Element "Device" können in bestimmten Fällen zum Zweck des reinen Zeitabgleichs, auch ohne die Messwertinformation verschickt werden. Dies dient dann lediglich der Sicherstellung einer Synchronität zwischen Server und Feldgerät.

Gemäß einem weiteren Ausführungsbeispiel der vorliegenden Erfindung sendet der Server zusätzlich eine Antwort an das Feldgerät, dass die Systemzeit des Feldgerätes in Ordnung ist, wenn der Sollwert vom aktuellen Zeitwert um höchstens den vorgegebenen Schwellenwert abweicht. Ebenso werden in einem weiteren Schritt sämtliche zu speichernde Daten von dem Feldgerät an den Server übertragen und der Server bestätigt in einem weiteren Schritt den Datenempfang.

Dieses Verfahren stellt also sicher, dass Daten, die über das Kommunikationsnetzwerk von dem Feldgerät an den Server übertragen wurden, nur dann auf dem Server gespeichert werden können, wenn die Zeit des Feldgerätes automatisch und unmittelbar zuvor an die Zeit des Servers angepasst wurde. Also lediglich wenn Synchronität und eine gleiche Zeitbasis zwischen allen Feldgeräten und dem Server vorliegt, können Daten serverseitig gespeichert werden. Dabei ist sowohl eine blockweise Übertragung von Daten als auch eine einzelne, sequenzielle Übertragung von Daten durch das Daten- und Kommunikationsnetz möglich. Die Übertragung kann dabei durch ein http-Protokoll realisiert werden, woraus eine Quittierung bzw. Bestätigung bei Datenempfang durch den Server mit einem http-Status 200 beantwortet wird. Dabei gilt für dieses und für jedes weitere Ausführungsbeispiel der vorliegenden Erfindung, dass die Synchronisation bzw. die Initiierung dieser Synchronisation sowohl automatisch durch den Server bzw. das Feldgerät bzw. die Feldgerätesteuerung initiiert werden kann, jedoch ist eine momentane Aufforderung des Benutzers zum Starten des Verfahrens jederzeit möglich. Dies stellt eine zusätzliche und alternative Sicherheitsmaßnahme innerhalb des erfindungsgemäßen Verfahrens dar.

Gemäß einem weiteren Ausführungsbeispiel der vorliegenden Erfindung weist das Verfahren weiterhin das Senden einer Serverzeit an das Feldgerät und das Auffordern zu einer zeitlichen Synchronisation des Feldgerätes mit dem Server auf. Ebenso ist das Speichern des Vorgangs "Zeitsynchronisation im Feldgerät" in einem Meldungspuffer auf dem Server Teil diese Ausführungsbeispiels.

Sollte das Verfahren zur Sicherstellung der Zeitbasis und richtigen Einstellung der Zeitzone im jeweiligen Feldgerät eine nötige Synchronisation festgestellt haben, so sendet der Server seine Zeit an das Feldgerät. Es ist somit ein Fehler auf Seiten des Auswertgeräts bzw. Feldgeräts hinsichtlich der aktuellen Zeit bzw. hinsichtlich der Einstellung der Zeitzone behoben worden. Dies wird durch die Speicherung dieses Vorgangs in einem Meldungspuffer auf dem Server, also einer extra dafür ausgelegten Datenbank, registriert.

Gemäß einem weiteren Ausführungsbeispiel der vorliegenden Erfindung ist das erfindungsgemäße Verfahren in das Erfassungssystem WEB-VV implementiert.

Das erfindungsgemäße Verfahren lässt sich beispielsweise in dem webbasierten Messwerterfassungs- und Visualisierungssystem WEB-VV implementieren und einsetzen. Dabei erhält WEB-VV, welches System nun als Server dient, seine Messwertinformationen mit zugehörigen Zeitstempeln von einer Vielzahl von Auswertgeräten als (beispielsweise XML-) Datei und speichert diese zentral in einer Datenbank, die dafür ausgelegt ist, ab. Die gespeicherten Daten können im WEB-VV Server beliebig kombiniert und über Browserzugriff als sog. Messwertansichten visualisiert werden bzw. zur Weiterverarbeitung an übergeordnete Tools, z. B. Logistiktools, gereicht werden. Das Ziel, die Zeitbasis für alle im WEB-VV-Verbund beteiligten Geräte synchron zu halten, kann am Einfachsten dadurch erreicht werden, dass alle Geräte die Zeitinformation zentral von einer Stelle erhalten.

Gemäß einem weiteren Ausführungsbeispiel der vorliegenden Erfindung beinhaltet das erfindungsgemäße Verfahren den Schritt des Aufforderns des Feldgeräts durch den Server zu einem Uhrenvergleich.

Da nicht nur das Feldgerät den Beginn der erfindungsgemäßen Kommunikation zwischen dem Feldgerät und dem Server veranlassen kann, sondern da dies auch durch den Server geschehen kann, sendet in diesem Fall der Server einen Befehl an das gewünschte Feldgerät mit dem Ziel des Uhrenvergleichs. Daraufhin erzeugt das Auswertgerät beispielsweise eine XML-Datei, in jedem Fall aber eine Zeitvergleichsdatei, und liefert diese an den Server, beispielsweise an WEB-VV zurück, wo die Abweichung zwischen Gerätezeit und Serverzeit überprüft wird.

Gemäß einem weiteren Ausführungsbeispiel der vorliegenden Erfindung weist das erfindungsgemäße Verfahren weiterhin eine Ermöglichung zum Übernehmen der Daten durch den Server nur dann auf, wenn sichergestellt wurde, dass in dem Server und dem jeweiligen Daten liefernden Feldgerät gleiche Zeiten herrschen bzw. wenn die Differenz aus Sollwert (am) Server und Gerätezeit (also dem aktuellen Zeitwert, also am Feldgerät bzw. der Felgerätesteuerung) den Schwellwert nicht überschreitet.

Dabei ist in diesem und in jedem anderen Ausführungsbeispiel der vorliegenden Erfindung mit dem Begriff gleiche Zeiten oder gleiche Uhrzeit gemeint, dass nach Berücksichtigung von verschiedenen Zeitzonen, in denen sich ein Feldgerät und ein Server befinden können, die gleiche Zeit in beiden Geräten herrscht. Dabei wird auch eine Umrechnung normiert auf einen gewünschten Standard zum Beispiel UTC berücksichtigt und durchgeführt.

Durch diesen Schritt des erfindungsgemäßen Verfahrens ist es also möglich, eine gesicherte automatisierte Synchronisation der Zeitbasis von weltweit verteilten Steuerungen und Feldgeräten in der Prozessautomation mittels eines speziellen Zeitservers zu realisieren. Wobei an dieser und an jeder anderen Stelle der vorliegenden Erfindung unter einem Server ein Zeitserver zu verstehen ist, der in der Lage ist, einen zeitlichen Sollwert zu einem angeschlossenen Feldgeräte über ein Netz zur Verfügung zu stellen.

Gemäß einem weiteren Ausführungsbeispiel der vorliegenden Erfindung wird in dem erfindungsgemäßen Verfahren zumindest eine der Datengruppen "Zeitvergleichsdaten" und "zu speichernde Daten" in einem XML-Dateiformat verwendet.

Die Extensible Markup Language (XML) ist eine Auszeichnungssprache zur Darstellung hierarchisch strukturierter Daten in Form von Textdateien. Da diese Daten für den Austausch zwischen unterschiedlichen IT-Systemen im Internet speziell geeignet sind, kann es von Vorteil sein, dieses Dateiformat im erfindungsgemäßen Verfahren zu benutzen.

Gemäß einem weiteren Ausführungsbeispiel der vorliegenden Erfindung erhalten alle Feldgeräte in dem erfindungsgemäßen Verfahren zentral durch den Server die Zeitinformation.

Diese serverseitige Steuerung und Bereitstellung der Zeit in den Feldgeräten bietet die höchste Sicherheit, um sich gegen manuelle Bedienfehler in den weltweit verteilten Feldgeräten, falschen Einstellungen des Zeitzonenoffsets innerhalb der Bediensoftware der Feldgeräte, und gegenüber dem technisch gegebenen Zeitdrift der Uhren innerhalb der Feldgeräte abzusichern. Das Überprüfen der richtigen Zeiteinstellung eines jeden Feldgerätes wird in einer hinreichend hohen Taktung vollzogen (dabei spielt es keine Rolle, ob dies serverseitig oder feldgerätseitig initiiert wurde). So kann damit erreicht werden, dass die Zeit für alle beteiligten Feldgeräte durch den Server automatisch synchron gehalten wird. Dies wird nicht zuletzt durch das Kontrollieren und ggf. Korrigieren der gesetzten Zeitzonen in jedem Feldgerät bzw. in der Bediensoftware des jeweiligen Feldgerätes durch den Server geleistet.

Gemäß einem weiteren Ausführungsbeispiel der vorliegenden Erfindung wird in dem erfindungsgemäßen Verfahren eine http-Kommunikation zwischen dem Server und den Feldgeräten verwendet.

Das hypertext transfer protocol (http) ist ein Protokoll zur Übertragung von Daten über ein Netzwerk. Es wird hauptsächlich eingesetzt, um Webseiten und andere Daten aus dem World Wide Web in einen Webbrowser zu laden.

Gemäß einem weiteren Ausführungsbeispiel der vorliegenden Erfindung benutzt das erfindungsgemäße Verfahren als Kommunikations- und Datennetz das Internet.

Gerade die Sicherheit und die weltweite Verfügbarkeit macht das Internet zu einem interessanten Netzwerk, in dem der erfindungsgemäße Daten- und Informationsaustausch hinreichend ermöglicht wird.

Gemäß einem weiteren Ausführungsbeispiel der vorliegenden Erfindung umfasst das Einstellen des aktuellen Zeitwerts sowohl das zeitliche Synchronisieren des Feldgerätes mit Korrigieren einer Echtzeituhr des Feldgerätes sowie das Korrigieren von Zeitstempeln für die momentan produzierten Daten in dem Feldgerät.

Da es sich bei dem Speichervorgang von Daten in einem Feldgerät um einen längeren Vorgang handeln kann, also um einen Vorgang, bei dem Daten eines Vorgangs unterschiedliche Zeitinformationen bzw. sog. Zeitstempel enthalten, ist durch dieses erfindungsgemäße Vorgehen sichergestellt, dass auch die Dateien die richtige Zeitinformation enthalten, die während einer Synchronisation gerade produziert werden. Alle Daten einer solchen Datei, von der ersten bis zur letzten, enthalten damit die gleiche und richtige, nämlich an die Serverzeit angepasste Zeitinformation nach einer Synchronisation.

Gemäß einem weiteren Ausführungsbeispiel der vorliegenden Erfindung weist das erfindungsgemäße Verfahren weiterhin den Schritt des Sammelns von verschiedenen Datensätzen mit zugehörigen Zeitstempeln im Feldgerät auf sowie den Schritt der Änderung aller Zeitstempel bei einer anstehenden Zeitsynchronisation.

Im Gegensatz zu dem momentanen Speichern von aktuellen Daten, bei dem ein Prozessbild zu einem festen Zeitpunkt erstellt wird, können auch sog. Trenddaten bzw. Historiedaten gespeichert werden. Dabei wird über einen längeren Zeitraum als eine typische durchschnittliche Messung bzw. eine typische durchschnittliche Aufnahme von Daten dauert Datenmaterial gesammelt und blockweise später zur Verfügung gestellt. Um nun zu ermöglichen, dass auch diese blockweise übertragenen Daten, diese so genannten Trenddaten, alle vollständig mit einem richtigen Zeitstempel ausgestattet sind, werden bei einer anfallenden Synchronisation nicht nur die Gerätezeit des Feldgerätes, sondern auch die Trenddaten und dabei deren Zeitstempel synchronisiert und somit an die Serverzeit angepasst.

Gemäß einem weiteren Ausführungsbeispiel der vorliegenden Erfindung nimmt das Feldgerät zu vordefinierten Zeiten Kontakt über das Kommunikations- und Datennetz zum Server auf.

Dieses Ausführungsbeispiel ermöglicht bei einer hinreichend genauen Taktung bzw. Einstellung der vordefinierten Zeiten die Synchronität zwischen Server und Feldgerät bis auf ein minimales Restrisiko. Dabei ist alternativ oder auch zusätzlich möglich, dass durch den Benutzer eine momentane Aufforderung zur Zeitsynchronisation getriggert werden kann.

Diese zusätzliche benutzerdefinierte Zeitsynchronisation erhöht somit die mögliche maximale Synchronität des Systems.

Gemäß einem weiteren Ausführungsbeispiel der vorliegenden Erfindung ist ein daten- und kommunikationsnetzbasiertes Messsystem zur Messung eines Füllstandes oder eines Drucks und zur automatischen Zeitsynchronisation angegeben. Dabei weist das Messsystem einen Server, zumindest ein Feldgerät oder zumindest eine Feldgerätesteuerung und eine Kommunikationsverbindung zwischen dem Server und dem zumindest einen Feldgerät bzw. der zumindest einen Feldgerätesteuerung zur gegenseitigen Datenübertragung auf. Dabei ist das Feldgerät bzw. die Feldgerätesteuerung zur Bestimmung eines aktuellen Zeitwerts ausgestaltet und der Server ist zur Bereitstellung eines Sollwerts eingerichtet. Weiterhin ist der Server zum Einstellen des aktuellen Zeitwerts auf den Sollwert eingerichtet, wenn der Sollwert vom aktuellen Zeitwert um mehr als einen vorgegebenen Schwellwert abweicht.

Durch dieses erfindungsgemäße Messsystem kann also in weltweiten netzbasierten Client/Serversystemen, in welchen der Server Messwert- und Geräteinformationen mit Zeitstempelinformationen entgegennehmen und archivieren soll, eine unerlässlich einheitliche Zeitbasis auf beiden Seiten des Systems sichergestellt werden. Insbesondere wenn die Clients, also die Feldgeräte, Messwertinformationen über einen längeren Zeitraum sammeln und zu einem geeigneten Zeitpunkt blockweise an den Server leiten sollen, ist diese zeitliche Kontrolle bzw. zeitliche Korrektur durch den Server von absoluter Wichtigkeit. Bei der erfindungsgemäßen Anordnung erfolgt die Konfiguration der Zeitzonen sowie die Bereitstellung der Referenzzeit, nämlich der Serverzeit der beteiligten Feldgeräte, an einer zentralen Stelle, nämlich nur an dem genannten Server. Sowohl ein natürlich technischer Zeitdrift als auch ein versehentlich veränderter Wert in der Zeitbasis des Feldgerätes vor Ort wird durch den Server registriert und bei der nächsten Kommunikation mit dem Feldgerät wird die Zeitbasis automatisch wieder auf den Sollwert, nämlich auf die Systemzeit des Servers, gesetzt bzw. die richtige Zeitzone eingestellt.

Gemäß einem weiteren Ausführungsbeispiel der vorliegenden Erfindung ist das erfindungsgemäße Messsystem mit einem Feldgerät ausgestattet, welches derart eingerichtet ist, um Zeitvergleichsdaten zu erzeugen, und um Zeitvergleichsdaten an den Server zu versenden. Ebenso ist der Server zur Bereitstellung eines Schwellwertes zur erlaubten Zeitabweichung eingerichtet und ist in der Lage, den Zeitunterschied zwischen dem aktuellen Zeitwert und dem Sollwert zu bestimmen. Ebenso kann der Server den Zeitunterschied mit dem Schwellwert vergleichen und entscheidet, ob der Zeitunterschied größer oder kleiner als der Schwellwert ist. Weiterhin ist der Server derart eingerichtet, dass er eine Antwort an das Feldgerät senden kann, in welcher dem Feldgerät mitgeteilt wird, dass die Zeit des Feldgerätes in Ordnung ist. Weiterhin ist das Feldgerät zu einer zeitlichen Synchronisation eingerichtet, wobei dabei Korrekturen an den Zeitstempeln momentan produzierter Daten in dem Feldgerät vorgenommen werden. Weiterhin ist das Feldgerät derart eingerichtet, dass die komplett zu speichernden Daten an den Server übertragen werden können. Der Server wiederum ist zur Übernahme der Daten in eine Datenbank eingerichtet und kann den Datenempfang über das Kommunikations- und Datennetz an das Feldgerät bestätigen. Weiterhin ist der Server zum Senden einer Serverzeit an das Feldgerät und zum Auffordern zu einer zeitlichen Synchronisation des Feldgerätes mit dem Server eingerichtet. Um den Fall der Synchronisation archivieren zu können, weist der Server einen sog. Meldungspuffer auf, in dem der Server den Vorgang "Zeitsynchronisation im Feldgerät" speichert.

Gemäß einem weiteren Ausführungsbeispiel der vorliegenden Erfindung ist ein Computerprogramm zur automatischen Zeitsynchronisation von Feldgeräten, nämlich Füllstandsmessgeräten und Druckmessgeräten sowie Feldgerätesteuerungen in einem Kommunikations- und Datennetz angegeben, wobei das Computerprogramm bei Ausführung durch einen Prozessor den Prozessor veranlasst, die folgenden Schritte auszuführen: Das Bestimmen eines aktuellen Zeitwerts durch das Feldgerät oder durch die Feldgerätesteuerung und die Bereitstellung eines Sollwerts in einem zentralen Server. Weiterhin wird der Schritt Vergleich des aktuellen Zeitwerts mit dem Sollwert ausgeführt, worauf der Schritt Einstellen des aktuellen Zeitwerts auf den Sollwert erfolgt, wenn der Sollwert vom aktuellen Zeitwert um mehr als einen vorgegebenen Schwellwert abweicht.

Gemäß einem weiteren Ausführungsbeispiel der vorliegenden Erfindung ist ein Speichermedium angegeben, auf welchem ein Computerprogramm zur automatischen Zeitsynchronisation von Feldgeräten, nämlich Füllstandsmessgeräten und Druckmessgeräten sowie Feldgerätesteuerungen in einem Kommunikations- und Datennetz gespeichert ist. Dabei veranlasst dieses Computerprogramm bei Ausführung durch einen Prozessor den Prozessor, die folgenden Schritte durchzuführen: Das Bestimmen eines aktuellen Zeitwerts durch das Feldgerät oder durch die Feldgerätesteuerung sowie die Bereitstellung eines Sollwerts in einem zentralen Server. Weiterhin erfolgt der Schritt Vergleich des aktuellen Zeitwerts mit dem Sollwert, woraufhin das Einstellen des aktuellen Zeitwerts auf den Sollwert erfolgt, wenn der Sollwert vom aktuellen Zeitwert um mehr als einen vorgegebenen Schwellwert abweicht.

Gemäß einem weiteren Ausführungsbeispiel der vorliegenden Erfindung ist ein Mikroprozessor zur automatischen Zeitsynchronisation von Feldgeräten, nämlich Füllstandsmessgeräten und Druckmessgeräten sowie Feldgerätesteuerungen in einem Kommunikations- und Datennetz und zum Ausführen der folgenden Schritte: Bestimmen eines aktuellen Zeitwerts durch das Feldgerät oder durch die Feldgerätesteuerung und die Bereitstellung eines Sollwerts in einem zentralen Server. Ebenso wird der Schritt Vergleich des aktuellen Zeitwerts mit dem Sollwert ausgeführt und der Schritt Einstellen des aktuellen Zeitwerts auf den Sollwert erfolgt genau dann, wenn der Sollwert vom aktuellen Zeitwert um mehr als einen vorgegebenen Schwellwert abweicht.

Weitere Ausführungsbeispiele und Vorteile der Erfindung ergeben sich aus den Unteransprüchen.

Im Folgenden werden mit Verweis auf die Figuren bevorzugte Ausführungsbeispiele der vorliegenden Erfindung beschrieben.

### Kurze Beschreibung der Zeichnungen

- Fig. 1: zeigt eine schematische Darstellung des Verfahrens zur erfindungsgemäßen Synchronisation gemäß einem Ausführungsbeispiel der vorliegenden Erfindung, wobei der Verbindungsaufbau ausgehend vom Feldgerät ist.
- Fig. 2: zeigt eine schematische Darstellung zur erfindungsgemäßen Synchronisation gemäß einem Ausführungsbeispiel der vorliegenden Erfindung, wobei der Verbindungsaufbau ausgehend von dem Server ist.
- Fig. 3: zeigt eine schematische Darstellung eines Kommunikations- und Datennetzes, in welchem ein Ausführungsbeispiel des erfindungsgemäße Verfahrens implementiert ist.
- Fig. 4: zeigt eine mögliche Ansicht der Bediensoftware des Servers zur Einstellung der Gerätenetzzugangsdaten für ein Feldgerät.
- Fig. 5: zeigt eine schematische Darstellung eines Kommunikations- und Datennetzes, in dem ein Ausführungsbeispiel des erfindungsgemäße Verfahrens implementiert ist.
- Fig. 6: zeigt eine schematische Darstellung ein Messsystems gemäß einem Ausführungsbeispiel der vorliegenden Erfindung.
- Fig. 7: zeigt eine schematische Darstellung eines Dialogs der FeldgeräteBediensoftware.
- Fig. 8: zeigt eine schematische Darstellung eines Dialogs der FeldgeräteBediensoftware.

### Detaillierte Beschreibung von exemplarischen Ausführungsformen

Die Darstellungen in den Figuren sind schematisch und nicht maßstäblich.

In der folgenden Figurenbeschreibung werden für die gleichen oder ähnlichen Elemente die gleichen Bezugsziffern verwendet.

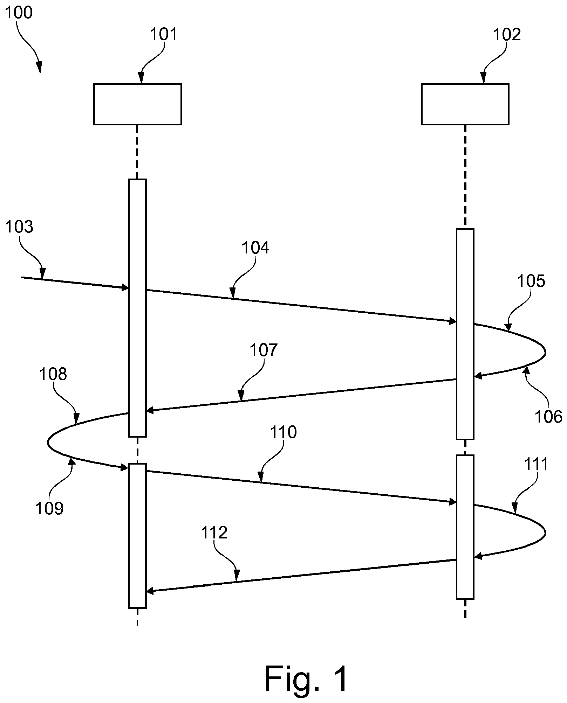

Fig. 1 zeigt ein Verfahren gemäß einem Ausführungsbeispiel der vorliegenden Erfindung, bei dem die Synchronisation bzw. der Verbindungsaufbau zur Synchronisation ausgehend von dem Feldgerät gestartet wird. Das Feldgerät bzw. die Feldgerätesteuerung 101 sendet 104 nach einem möglichen Ereignis 103 den aktuellen Zeitwert bzw. die Zeitvergleichsdaten an den Server 102. Dabei kann das Ereignis in dem gesamten System auftreten, beispielsweise kann es ein Ereignis in WEB-VV sein, ein so genanntes WEB-VV-Event. Hierbei kann ein WEB-VV-Event z.B. ein automatisch erzeugtes Triggerereignis im Feldgerät sein, also z. B. dass der programmierte Zeitpunkt zum Versenden der Messwerte an den WEB-VV Server erreicht wurde.
Dabei können die Zeitvergleichsdaten beispielsweise im XML-Format vorliegen. Anschließend vergleicht 105 der Server den aktuellen Zeitwert mit dem Sollwert und entscheidet je nachdem, ob der Zeitunterschied zwischen dem aktuellen Zeitwert und dem Sollwert einen gewissen Schwellenwert übersteigt, und ob er eine Aufforderung zur Zeitsynchronisation 106 an das Feldgerät 101 sendet. Liegt die tatsächliche Abweichung innerhalb des Grenzwertes, so schickt 107 der Server die aktuelle Serverzeit "Server Date Time" zusammen mit dem "Status" = DeviceTimeok zurück. Andernfalls beinhaltet die Antwort die aktuelle Serverzeit "Server Date Time" zusammen mit dem "Status" = setDeviceTime. Jetzt kann die Verbindung zwischen dem Feldgerät 101 und dem Server 102 unterbrochen werden. Das Feldgerät 101 prüft nun 108 den vom Server 102 gesendeten Status. Je nach gesendetem Status muss das Feldgerät die Gerätezeit und die Trenddaten korrigieren 109. Anschließend sendet 110 das Feldgerät die kompletten Daten an den Server. Hierfür wird, falls die Verbindung zuvor unterbrochen wurde, eine vollständig unabhängige neue Verbindung zwischen dem Feldgerät 101 bzw. der Feldgerätesteuerung und dem Server 102 hergestellt. Der Server 102 übernimmt 111 daraufhin die Daten. Anschließend bestätigt 112 der Server den Dateiempfang.

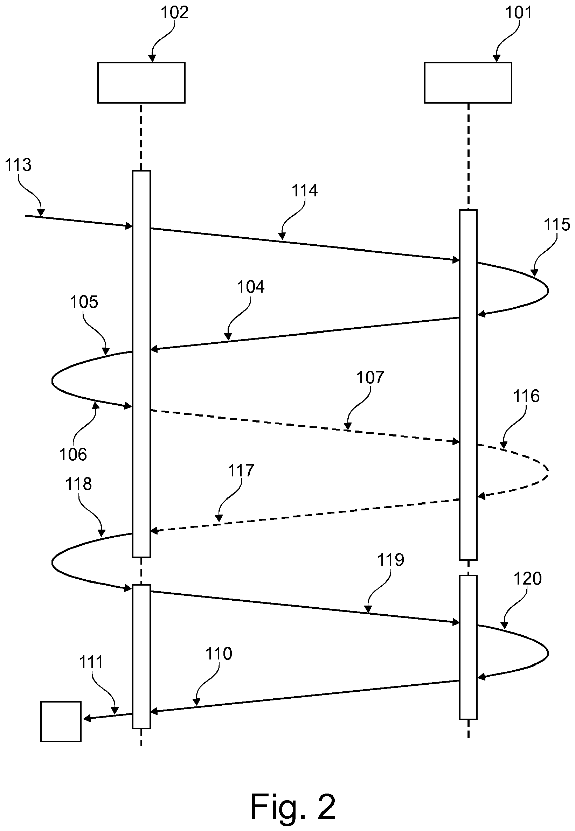

Fig. 2 zeigt eine schematische Darstellung des erfindungsgemäßen Synchronisationsverfahrens gemäß einem Ausführungsbeispiel der vorliegenden Erfindung, wobei der Verbindungsaufbau im hier gezeigten Ausführungsbeispiel ausgehend vom Server ist. Nach einem vorherigen Ereignis 113 (z. B. nach einer Interaktion des WEB-VV-Benutzers) beginnt der Server 102 mit einer Aufforderung 114 zum Uhrenvergleich an das Feldgerät 101. Daraufhin reagiert das Feldgerät 101 mit der Erzeugung 115 des aktuellen Zeitwerts bzw. der aktuellen Zeitvergleichsdaten. Weiterhin sendet 104 das Feldgerät 101 den aktuellen Zeitwert bzw. die Zeitvergleichsdaten an den Server. Der Server wiederum vergleicht 105 den aktuellen Zeitwert mit dem Sollwert. Je nach Ergebnis des Vergleichs, also je nachdem, ob dieser Zeitunterschied größer oder kleiner als ein vordefinierter Schwellwert ist, erfolgt eine Aufforderung zur Zeitsynchronisation 106. Dabei sendet 107 der Server 102 die aktuelle Serverzeit "Server Date Time" zusammen mit dem "Status" = setDeviceTime und fordert damit das Feldgerät zur Zeitsynchronisation auf. Das Feldgerät 101 wiederum reagiert mit einer Korrektur 116 der Gerätezeit und der Trenddaten. Ebenfalls sendet das Feldgerät 101 eine Bestätigung 117 über das Daten- und Kommunikationsnetz an den Server, dass soweit alles in Ordnung ist, z. B. einen http-Status 200 und quittiert damit die Korrektur der Gerätezeit und der Trenddaten.

Dabei wird im Server 102 das Ereignis "Zeitsynchronisation im Feldgerät" im Meldungspuffer gespeichert 118. Daraufhin folgt ein Senden einer Aufforderung 119 zum Datenaustausch. Das Feldgerät 101 wird somit zur Erzeugung von Messwertdaten aufgefordert 120, woraufhin das Feldgerät 101 den Datenaustausch 110 an den Server 102 veranlasst. Die Daten werden über das Daten- und Kommunikationsnetz versendet und vom Server 102 übernommen 111.

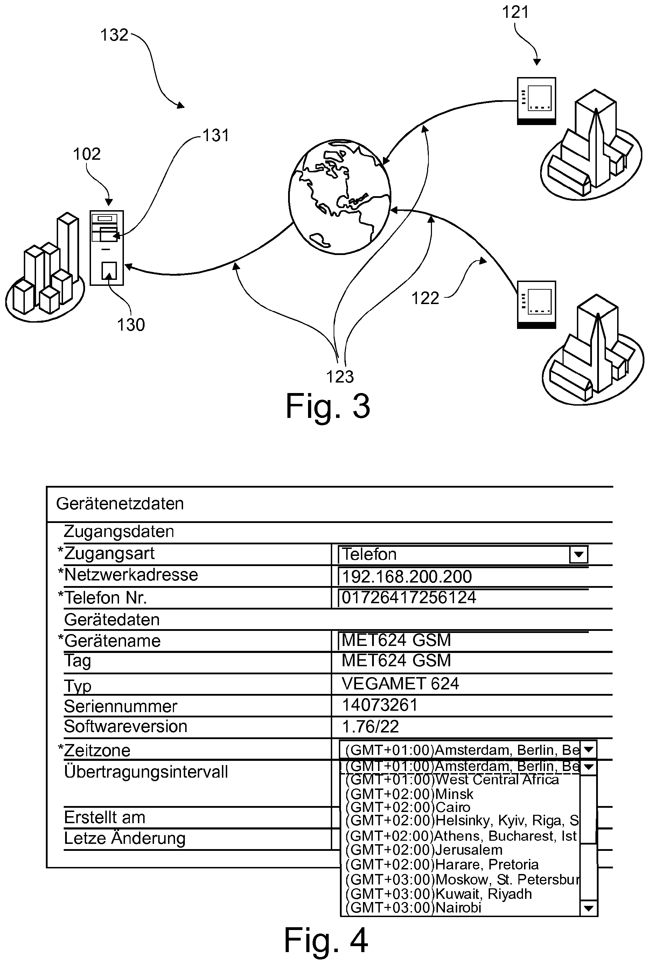

Fig. 3 zeigt ein schematisches Messsystem gemäß einem Ausführungsbeispiel der vorliegenden Erfindung, mit einem Server 102, der ein Speichermedium 130 und eine CPU, also einen Mikroprozessor 131 enthält. Ebenso ist das Kommunikations- und Datennetz 123, auf welchem das erfindungsgemäße Verfahren basiert, gezeigt, und es sind beispielhaft zwei global verteilte Feldgeräte 121 und 122 dargestellt. Über das Kommunikations- und Datennetz 123 ist es durch das erfindungsgemäße Verfahren also möglich, die gesicherte automatisierte Synchronisation der Zeitbasis von diesen weltweit verteilten Steuerungen 121 und 122 in der Prozessautomation mittels eines speziellen Zeitservers 102 zu realisieren. Dabei können die Steuerungen bzw. Feldgeräte oder auch Clients und der Server das Internet als beispielhafte Ausgestaltung des Daten- und Kommunikationsnetzes 123 nutzen.

Fig. 4 zeigt beispielhaft die Oberfläche einer Bediensoftware des Servers zur Einstellung der Gerätenetzzugangsdaten für ein Feldgerät des erfindungsgemäßen Verfahrens. Dabei ist deutlich zu erkennen, dass hier die jeweilige Zeitzone, in der sich das jeweilige Feldgerät befindet, dargestellt ist. Wichtig ist jedoch, dass die Zeitzone durch das erfindungsgemäße Verfahren zentral und weltweit durch den Server eingestellt und kontrolliert wird. Somit kann eine hohe Sicherheitsstufe bezüglich der Synchronität aller Feldgeräte mit dem Server sowie die korrekte Zeitzoneneinstellung in allen externen Feldgeräten gewährleistet werden. Sollte es durch einen Benutzer zu einer Umstellung der Zeitzone kommen, so wird dies bei der nächsten Kommunikation über das Kommunikations- und Datennetz durch den Server festgestellt und während derselben Kommunikation behoben und auf den ursprünglichen richtigen Zeitzonenwert zurückgestellt. Muss solch eine Synchronisation stattfinden, so wird dies in einem Meldungspuffer auf dem Server archiviert.

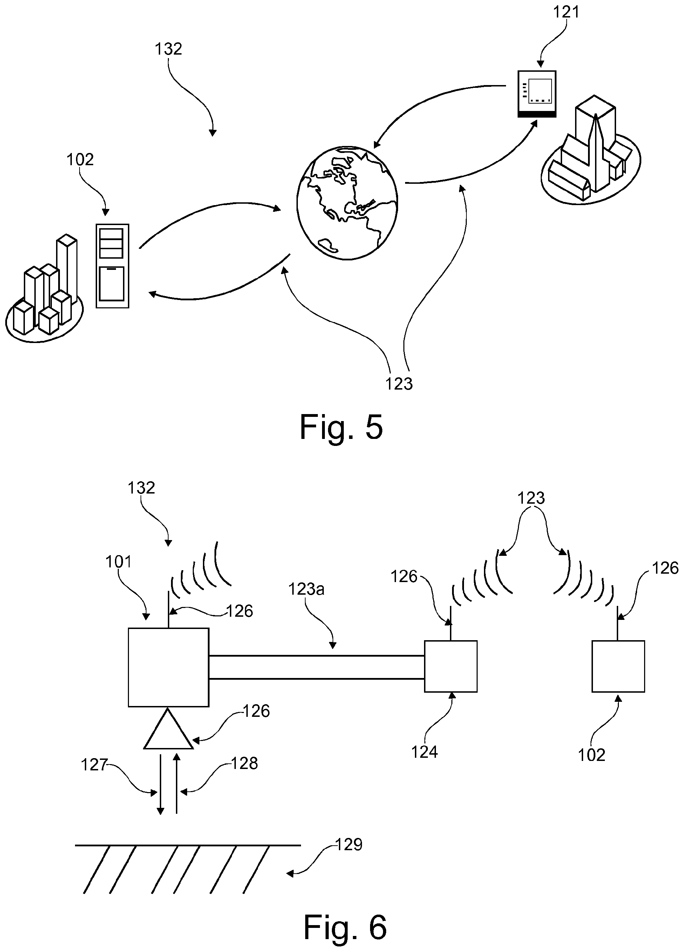

Fig. 5 zeigt schematisch ein erfindungsgemäßes Messsystem 132 mit einem Server 102 und einem Feldgerät bzw. einer Feldgerätesteuerung 121. Dabei ist deutlich zu erkennen, dass beide Seiten des erfindungsgemäßen Messsystems den Kontakt zur gegenüberliegenden Seite aufnehmen können, was durch die Pfeile ausgehend von dem jeweiligen Initiator dargestellt wird. Dabei geschieht dies über das Kommunikations- und Datennetz 123.

Fig. 6 zeigt schematisch eine Darstellung des erfindungsgemäßen Messsystems 132, welches ein Feldgerät 101 und eine Verbindung 123a z.B. in Form einer 4....20 mA Leiterschleife zur Feldgerätesteuerung 124 aufweist. Der Server 102 besitzt ebenso wie die Feldgerätesteuerung und das Feldgerät eine Antenne 126. Diese Antenne stellt beispielhaft die Verbindung zum Kommunikations- und Datennetz 123 dar. Anstelle oder zusätzlich zu einer kabellosen Verbindung kann auch eine kabelgebundene Verbindung bestehen.
Weiterhin ist zu erkennen, dass das Feldgerät 121 eine weitere in diesem Bild unten angebrachte zweite Antenne 126 aufweist, die in diesem Fall zur Messung des Füllstandes bzw. des Drucks ausgerichtet ist. Man sieht somit ein Sendesignal 127 und ein Empfangssignal 128, das den Stand des Füllgutes 129 überprüft.

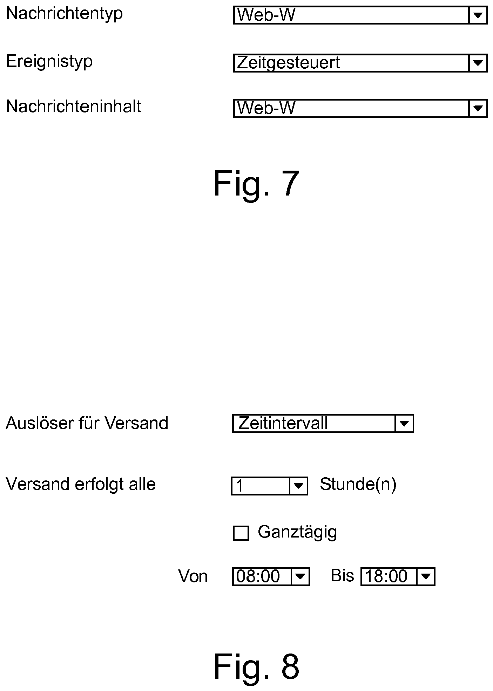

Fig.7 und Fig.8 zeigen schematische Darstellungen von Dialogen der Feldgeräte-Bediensoftware. Fig. 7 stellt dabei den Teil dar, in welchem der Benachrichtigungstyp definiert wird. Fig. 8 hingegen ist der Teil zu sehen, der den Sendezeitpunkt für den Nachrichten-Versand festlegt. Dabei ist zu erkennen, dass das Intervall einer Abfrage angezeigt wird, wobei dies erfindungsgemäß serverseitig gesichert eingestellt werden kann.

Das Verfahren gemäß einem Ausführungsbeispiel der vorliegenden Erfindung zwingt den Serververantwortlichen zum Setzen der Zeitzone für jeden beteiligten Client, wobei dies zentral und nur serverseitig erforderlich ist.
Wird die Zeitbasis eines Clients vor Ort versehentlich verändert, registriert der Server dies bei der nächsten Kommunikation mit dem Client und die Zeitbasis im Client wird automatisch wieder auf den Sollwert gesetzt.

Die erfindungsgemäße Anordnung kann beispielsweise in dem web-basierten Messwerterfassungs- und Visualisierungssystem "WEB-VV" eingesetzt werden. Dabei wird zwischen den beiden Kommunikationsseiten, nämlich einerseits dem Server, hier auch als WEB-VV bezeichnet, und den Geräten bzw. Clients oder Feldgeräten andererseits unterschieden.

Der Server, also beispielsweise WEB-VV, erhält seine Messwertinformationen mit zugehörigen Zeitstempeln von einer Vielzahl von Auswertgeräten (Clients) per Datei. Im speziellen kann dies ein XML-Datei sein. Der Server speichert weiterhin diese Information zentral in einer Datenbank ab. Die gespeicherten Daten können im WEB-VV-Server beliebig kombiniert und über Browserzugriff als so genannte Messwertansichten visualisiert werden bzw. zur Weiterverarbeitung an übergeordnete Tools, zum Beispiel Logistiktools, gereicht werden.

Neben den Prozessabbildern mit Zeitstempeln (Zeitstempel sind gleich Momentaufnahmen der Messwerte) können die Auswertgeräte auch Historiedaten mit Zeitstempel versehen als Datei, also zum Beispiel in Form von XML-Daten, abliefern.

Um nun für die Vielzahl der Messwerte eine sinnvolle Vergleichsmöglichkeit bzw. Weiterverarbeitbarkeit zu gewährleisten, ist es wichtig, dass für alle gespeicherten Werte eine einheitliche Zeitbasis zugrunde gelegt werden kann. Fig. 3 zeigt schematisch ein WEB-VV-System.

Das Ziel, die Zeitbasis für alle im WEB-VV-Verbund beteiligten Geräte synchron zu halten, kann am einfachsten dadurch erreicht werden, dass alle Geräte die Zeitinformation zentral von einer Stelle erhalten. Der Server kommuniziert mit den Auswertgeräten über viererlei Dienste, wobei bei der ersten Variante die Kommunikation vom Auswertgerät ausgeht. Der Dienst "Messwert senden" wird also vom Auswertgerät initiiert. Die Dienste "Gerätenetz scannen, Messwert aktualisieren, und Intervall für WEB-VV-Event setzen" werden durch den Server initiiert. In jedem Fall kann dabei eine http-Kommunikation verwendet werden, die es beiden Seiten erlaubt, Zeitinformationen vom Gegenüber in Erfahrung zu bringen und entsprechend auszunutzen. Da sich die Auswertgeräte in beliebigen Zeitzonen befinden können, muss WEB-VV beim Anlegen eines Gerätenetzes diese Information einmalig manuell mitgeteilt werden. Dies erfolgt durch einen dafür vorbereiteten Konfigurationsdialog im WEB-VV (siehe Fig. 4).

So wird WEB-VV in die Lage gesetzt, seine aktuelle Uhrzeit korrigiert auf die lokale Uhrzeit der Auswertgeräte zurückzuliefern (siehe dazu Fig. 5).

Wie oben erwähnt, übertragen sowohl die Auswertgeräte als auch die WEB-VV-Server ihre Zeitinformationen zum jeweiligen Gegenüber während jeder Verbindung außer bei dem Dienst "Gerätenetz scannen". Die Entscheidung, ob eine Zeitsynchronisation im Auswertgerät vorzunehmen ist, liegt jedoch alleine bei dem Server, also in diesem Fall bei WEB-VV. Dieser fordert das Auswertgerät im Bedarfsfall zu einer Synchronisation auf.

WEB-VV überprüft die Gerätezeitinformation eingehender Daten, also beispielsweise von XML-Messwertdaten und vergleicht diese mit der aktuellen Rechnerzeit, also der Zeit des Servers.

Die Auswertgeräte speichern zusammen mit den einzelnen Messwerten Zeitstempelinformation in der Struktur <Values> in den Messwertdaten, also in diesem Fall in den XML-Messwertdaten. Diese Zeitstempelinformationen repräsentieren den Zeitpunkt, zu dem ein Messwert im Auswertgerät erfasst und im Zwischenspeicher abgelegt wurde.

Zusätzlich liefern die Auswertgeräte Zeitinformationen in der Struktur <Device>. Diese Zeitinformation liefert die aktuelle Uhrzeit im Auswertgerät zum Zeitpunkt des Datenaustauschs mit dem Server, also mit WEB-VV.

Das Element "Device" der XML-Messwertdaten enthält neben einem persönlichen Namen des erstellenden Feldgerätes auch die Typen und Versionsbezeichnung sowie eine Seriennummer und die IP-Adresse. Als wichtigster Inhalt dieser Messwertdaten ist natürlich die genaue lokale Uhrzeit mit Datum in der Datei eingetragen.
Also zum Beispiel : < Device tag = "My MET", type = "VEGA Scan 693", version = "1.75/12", serial = "11111111", IP Address = "172.16.40.4", Time = "2006-07-26, 10:38:38 Uhr">.

Das XML-Element Device kann in bestimmten Fällen zum Zwecke des reinen Zeitabgleichs auch ohne die Messwertinformationen verschickt werden. In diesem Fall wird der Inhalt der XML-Datei mit XML-Zeitvergleichsdaten bezeichnet.

Für die Überprüfung von Rechnerzeit und Gerätezeit rechnet WEB-VV beide Zeitinformationen nach UTC (Universal Time Coordinated) um. Die Umrechnung erfolgt für die Rechnerzeit anhand der Windows-Ländereinstellungen, für die Gerätezeit "Time" des Auswertgerätes anhand der Zeitzonenzuordnung des Gerätenetzes im Server.

WEB-VV übernimmt die Messwerte generell zusammen mit den in der XML-Datei übertragenen Zeitstempeln in die Datenbank, wobei diese nach UTC normiert abgelegt werden.

Nachdem der Server die Daten komplett entgegengenommen hat, sendet er zusammen mit dem http-Status die Serverzeit korrigiert auf die lokale Zeitzone des Auswertgerätes in seiner Response zurück.

Dabei gilt für den gesamten vorhergehenden Teil der Beschreibung sowie für alles Folgende, dass WEB-VV beispielhaft für einen Server steht, der in der Lage ist, die erfindungsgemäße Durchführung eines Verfahrens zur automatischen Zeitsynchronisation von Geräten in netzbasierten Systemen durchzuführen.

Da sich die verschiedenen Kommunikationsmöglichkeiten zwischen dem Server und den Feldgeräten in ihrer Initiierung unterscheiden (Synchronisation von Auswertgerät ausgehend, oder Synchronisation vom Server ausgehend) sei im folgenden jeweils ein Beispiel aus beiden Gruppen ausführlich beschrieben.

Grundvoraussetzung für das Zusammenwirken von Auswertgeräten mit WEB-VV ist das Aktivieren der WEB-VV-Funktion innerhalb eines Auswertgerätes. Allgemein wird hier also im Auswertgerät die Funktion zur Kommunikation mit dem System bzw. der Serversoftware eingestellt. Dies geschieht durch die beiden in Fig. 7 und Fig. 8 dargestellten Dialoge der Auswertgerätebediensoftware, bevorzugt präsentiert durch einen Device Type Manager nach der Spezifikation von FDT. Demnach würde in dem Beispiel das Auswertgerät automatisch stündlich zwischen 8 und 18 Uhr lokaler Ortszeit Messwertdateien an den Server WEB-VV senden. Dabei ist deutlich zu sehen, dass hier die Frequenz der Synchronisierung eingestellt werden kann.

Die Funktion "Messwerte senden" an den Server bzw. WEB-VV über das Auswertgerät eröffnet mit einem Zeitvergleich gemäß eines Vergleichskommandos. Es werden dazu nur die Zeitvergleichsdaten, also der aktuelle Zeitwert versandt, wobei im Falle von XML-Zeitvergleichsdaten sich deren Inhalt im Wesentlichen auf das XML-Element Device beschränkt:

```
 <?xml version="1.0" encoding="iso-8859-1"?>
 <VEGA version="1.0">
 <DeviceNetwork>
 < Device tag = "My MET", type = "VEGA Scan 693", version = "1.75/12", serial =
 "11111111", IP Address = "172.16.40.4", Time = "2006-07-26, 10:38:38 Uhr"
 </Device>
 </DeviceNetwork>
 </VEGA>
```

In einer WEB-VV-Konfigurationsdatei wird ein Parameter zur Definition der erlaubten Zeitabweichung der Auswertgeräte bereitgestellt. Der Standardwert wird mit zwei Minuten beispielsweise eingetragen und ist veränderbar. Liegt die tatsächliche Abweichung innerhalb des Grenzwertes, so schickt der Server, also WEB-VV, die aktuelle Serverzeit "Server Date Time" zusammen mit dem Status: "Device Time OK" zurück. Andernfalls beinhaltet die Antwort die aktuelle Serverzeit "Server Date Time" zusammen mit dem Status "Set Device Time". Der Vorgang "Zeitsynchronisation im Auswertgerät" wird im Meldungspuffer "Meldungen/Ereignisse" des Supervisors , also auf einem Teil des Servers, eingetragen.

Je nach Inhalt der Antwort bzw. des Befehls des Servers, also je nach Inhalt des XML-Elements "Status", führt das Auswertgerät nun eine Zeitsynchronisation durch. Nach Beendigung der Zeitsynchronisation wird mit einem Befehl der eigentliche Datenaustausch angestoßen, also der Transfer der kompletten Daten, zum Beispiel der kompletten XML-Messwertdaten, an den Server, also zum Beispiel mit Post 2 ".../DataExchange.aspx". Der Server übernimmt die Messwertdaten in die Datenbank und bestätigt den Dateiempfang mit dem http-Status 200, wobei die XML-Response in diesem Fall entfällt. Dies beendet die Synchronisation, bei der der Verbindungsaufbau vom Auswertgerät initiiert wird.

Es folgt ein Beispiel einer Synchronisation, bei der der Verbindungsaufbau ausgehend vom Server initiiert wird.

Der Server, in diesem Fall der WEB-VV-Server, eröffnet die Kommunikation mit einer Aufforderung zum "Uhrenvergleich" über einen Befehl, also zum Beispiel ".../webvv/webvv.xml?type=timeExchange". Das Auswertgerät erzeugt die Zeitvergleichsdaten bzw. den aktuellen Zeitwert bzw. die XML-Zeitvergleichsdaten und liefert diese an WEB-VV zurück, wo die Abweichung zwischen Gerätezeit und Serverzeit überprüft wird.

Liegt die tatsächliche Abweichung innerhalb des Grenzwertes, so überspringt WEB-VV die Aktion zum Synchronisieren der Geräteuhr und fordert mit einem Befehl unmittelbar die Messwertdaten des Auswertgerätes an. Dies geschieht zum Beispiel mit "..../webvv/webvv.xml?type=dataExchange".
Die vom Auswertgerät erzeugten Messwertdaten werden nach Eintreffen im WEB-VV-Server in die Datenbank übernommen.

Liegt die tatsächliche Zeitabweichung außerhalb des Grenzwertes, so fordert WEB-VV mit einem Befehl mit Inhalt aktuelle Serverzeit "Server Date Time" zusammen mit dem "Status" gleich "Set Device Time" das Auswertgerät zur Zeitsynchronisation auf. Der Vorgang "Zeitsynchronisation im Auswertgerät" wird im Meldungspuffer "Meldungen/Ereignisse" des Supervisors eingetragen. Nach erfolgter Zeitsynchronisation werden dann die eigentlichen Messwertdaten wie oben angefordert und übertragen. Somit endet das Synchronisationsbeispiel für eine Kommunikation, die durch den WEB-VV-Server initiiert wurde.

Zusätzliche Mechanismen des Clients bezüglich der Systemzeit des Clients sind als zusätzliche Sicherheitsmaßnahme zur Sicherstellung der gleichen Zeitbasis implementiert. So ist zum Beispiel die Systemzeit der Clients (Auswertgeräte), die im Serververbund integriert sind, zentral über den Server verwaltet. Demnach darf die Systemzeit vor Ort nicht mehr beeinflussbar sein. Um dies zu erreichen, ist folgende Softwarefunktion implementiert. Das Verändern der Systemzeit wird gesperrt, wenn für das Gerät ein WEB-VV-Event angelegt und aktiviert ist. Dabei meint WEB-VV-Event die allgemeine Einstellung innerhalb des Feldgerätes bzw. innerhalb der Feldgerätesteuerung zur netzbasierten Zeitsynchronisation durch einen externen Server. Die Sperre gilt für Tastenbedienung an der Bedieneinheit des Auswertgerätes sowie für die Bedienung über die Bediensoftware (z.B. so genannte Device Type Manager, DTM). Weiterhin gibt das Auswertegerät eine Meldung an der geräteeigenen Anzeige aus, wenn der Anwender versucht, die aktive Sperre bezüglich Uhrzeit und Datum zu editieren. Wird in einem Auswertegerät die Zeitsynchronisation durch ein WEB-VV-Kommando oder eine WEB-VV-Response ausgelöst, so werden die Zeitstempel für die komplette laufende Aufzeichnung und die Echtzeituhr korrigiert.

Es ist im folgenden eine Tabelle 1 mit relevanten Server- bzw.- WEB-VV Antworten dargestellt:

**Tabelle 1**

| Auswertegerät | WEB-VV Response | | Reaktion im Auswertegerät |
|---|---|---|---|
| | | | |
| Uhrenvergleich bei | Http-Status z.B. 200 | | Echtzeituhr korrigieren und *.GND-Zeitstempel korrigieren |
| "Messwerte senden" mit: | ...... | | |
| <IP>/Web-VV/InBox/TimeExchange.aspx | <Response> | | |
| | <ServerDateTime>2005-10-18 10:20:12 | | |
| | </ServerDateTime> | | |
| | <Status>setDeviceTime | | |
| | </Status> | | |
| | </Response> | | |

Ebenso ist eine Tabelle 2 mit beispielhaften relevanten Kommandos an Hand des Beispiels WEB-VV gezeigt.

**Tabelle 2**

| WEB-VV Kommando | | Reaktion im Auswertegerät |
|---|---|---|
| | | |
| http://<IP>/webvv/webvv.xml? | | Keine Zeitkorrektur |
| type=scanNetwork | | |
| http://<IP>/webvv/webvv.xml? | | Keine Zeitkorrektur |
| type-data Exchange | | |
| http://<IP>/cgl/webvv/webvv.xml? | | Keine Zeitkorrektur |
| type=setInterval | | |
| http://<IP>/cgl/webvv/webvv.xml? | | Echtzeituhr korrigieren und *.GND-Zeitstempel korrigieren |
| type=setTime | | |

Ergänzend sei darauf hinzuweisen, dass umfassend und aufweisend keine anderen Elemente oder Schritte ausschließen und eine oder ein keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Verfahren zur automatischen Zeitsynchronisation
- 101: Feldgerät/Feldgerätesteuerung
- 102: Server
- 103: Server Ereignis
- 104: Senden des aktuellen Zeitwerts / der Zeitvergleichsdaten
- 105: Vergleich des aktuellen Zeitwerts mit dem Sollwert
- 106: Gegebenenfalls Aufforderung zur Zeitsynchronisation
- 107: Senden des Status zusammen mit der Serverzeit
- 108: Status prüfen
- 109: Gegebenenfalls Gerätezeit und Trenddaten korrigieren
- 110: Datenaustausch
- 111: Datenübernahme
- 112: Bestätigung des Dateiempfangs
- 113: vorheriges Ereignis z.B. Messwert aktualisieren
- 114: Aufforderung zum Uhrenvergleich
- 115: Erzeugung des aktuellen Zeitwerts / der Zeitvergleichsdaten
- 116: Korrektur der Gerätezeit und der Trenddaten
- 117: Senden einer Bestätigung, dass soweit alles in Ordnung, z.B. http Status 200
- 118: Speichern des Ereignisses "Zeitsynchronisation im Feldgerät" im Meldungspuffer des Servers.
- 119: Aufforderung zum Datenaustausch
- 120: Erzeugung von Messwertdaten
- 121: Feldgerät 1
- 122: Feldgerät 2
- 123: Daten- und Kommunikationsnetz
- 123a: Verbindung zur Steuerung
- 124: Feldgerätesteuerung
- 126: Antenne
- 127: Sendesignal
- 128: Empfangssignal
- 129: Füllgut
- 130: Speichermedium
- 131: CPU
- 132: Messsystem

## Patentansprüche

1. Verfahren basierend auf einem Kommunikations- und Datennetz zur automatischen Zeitsynchronisation von Feldgeräten, nämlich Füllstandsmessgeräten und Druckmessgeräten, sowie Feldgerätesteuerungen, das Verfahren aufweisend die Schritte:
Bestimmen eines aktuellen Zeitwertes durch das Feldgerät (101) oder durch die Feldgerätesteuerung (101);
Bereitstellung eines Sollwertes in einem zentralen Server (102);
Vergleich des aktuellen Zeitwerts mit dem Sollwert (105), **gekennzeichnet durch** Einstellen des aktuellen Zeitwerts auf den Sollwert, wenn der Sollwert vom aktuellen Zeitwert um mehr als einen vorgegebenen Schwellwert abweicht; und
Übernehmen von Daten von dem Feldgerät (101) oder der Feldgerätesteuerung (101) durch den Server (102) in eine Datenbank nur, wenn der Sollwert vom aktuellen Zeitwert um höchstens den vorgegebenen Schwellwert abweicht.

2. Verfahren nach einem der vorhergehenden Ansprüche, zusätzlich aufweisend die Schritte:
Versenden des aktuellen Zeitwerts (104) durch das Feldgerät (101) an den Server (102);
Bestimmen des Zeitunterschiedes zwischen dem aktuellen Zeitwert und dem Sollwert.

3. Verfahren nach einem der vorherigen Ansprüche, weiterhin aufweisend die Schritte:
Senden einer Antwort durch den Server (102) an das Feldgerät (101), dass die Systemzeit des Feldgerätes (101) in Ordnung ist (117), wenn der Sollwert vom aktuellen Zeitwert um höchstens den vorgegebenen Schwellwert abweicht;
Übertragen von sämtlichen zu speichernden Daten von dem Feldgerät (101) an den Server (102);
Bestätigen des Datenempfangs (112) durch den Server (102).

4. Verfahren nach einem der vorherigen Ansprüche, zusätzlich aufweisend die Schritte:
Senden einer Serverzeit an das Feldgerät (101) und Auffordern zu einer zeitlichen Synchronisation des Feldgerätes (101) mit dem Server (102);
Speichern des Vorgangs "Zeitsynchronisation im Feldgerät" in einem Meldungspuffer auf dem Server (118).

5. Verfahren nach einem der vorherigen Ansprüche, zusätzlich aufweisend den Schritt:
Auffordern des Feldgerätes (101) durch den Server (102) zu einem Uhrenvergleich (114).

6. Verfahren nach einem der vorherigen Ansprüche, zusätzlich aufweisend den Schritt:
Ermöglichung zum Übernehmen der Daten durch den Server (102) nur nach einer Sicherstellung gleicher Zeiten in Server (102) und Feldgerät (101).

7. Verfahren nach einem der vorherigen Ansprüche,
wobei alle Feldgeräte (101) zentral durch den Server (102) die Zeitinformation erhalten.

8. Verfahren nach einem der vorherigen Ansprüche,
wobei das Einstellen des aktuellen Zeitwerts das zeitliche Synchronisieren des Feldgerätes (101) mit Korrigieren einer Echtzeituhr des Feldgerätes (101) und mit Korrigieren von Zeitstempeln für die momentan produzierten Daten in dem Feldgerät (101) umfasst.

9. Verfahren nach einem der vorherigen Ansprüche, weiterhin aufweisend die folgenden Schritte:
Sammeln von verschiedenen Datensätzen mit zugehörigen Zeitstempeln im Feldgerät;
Änderung aller Zeitstempel bei einer Zeitsynchronisation.

10. Daten- und Kommunikationsnetz-basiertes Messsystem zur Messung eines Füllstands oder eines Drucks und zur automatischen Zeitsynchronisation, das Messsystem aufweisend:
einen Server (102);
zumindest ein Feldgerät (101) oder eine Feldgerätesteuerung (101);
eine Kommunikationsverbindung zwischen dem Server (102) und dem zumindest einen Feldgerät (101) zur gegenseitigen Datenübertragung,
wobei das zumindest eine Feldgerät (101) oder die Feldgerätesteuerung (101) zur Bestimmung eines aktuellen Zeitwerts ausgestaltet ist; und
wobei der Server (102) für eine Bereitstellung eines Sollwertes in dem Server (102) ausgestaltet ist; **dadurch gekennzeichnet, dass** der Server (102) zum Einstellen des aktuellen Zeitwerts auf den Sollwert eingerichtet ist, wenn der Sollwert vom aktuellen Zeitwert um mehr als einen vorgegebenen Schwellwert abweicht; und
wobei der Server (102) eingerichtet ist, Daten von dem Feldgerät (101) oder der Feldgerätesteuerung (101) in eine Datenbank nur zu übernehmen, wenn der Sollwert vom aktuellen Zeitwert um höchstens den vorgegebenen Schwellwert abweicht.

11. Meßsystem nach Anspruch 10,
wobei das Feldgerät (101) eingerichtet ist, um Zeitvergleichsdaten zu erzeugen; und
wobei das Feldgerät (101) eingerichtet ist, um die Zeitvergleichsdaten an den Server (102) zu versenden; und
wobei der Server (102) zur Bereitstellung eines Schwellwertes zur erlaubten Zeitabweichung eingerichtet ist; und
wobei der Server (102) zur Bestimmung des Zeitunterschiedes zwischen dem aktuellen Zeitwertes und dem Sollwert eingerichtet ist; und
wobei der Server (102) zum Vergleich des Zeitunterschiedes mit dem Schwellwert eingerichtet ist; und
wobei der Server (102) eingerichtet ist um zu entscheiden, ob der Zeitunterschied größer oder kleiner als der Schwellwert ist; und
wobei der Server (102) eingerichtet ist, um eine Antwort an das Feldgerät (101) zu senden, dass die Zeit des Feldgerätes (101) in Ordnung ist; und
wobei das Feldgerät (101) zu einer zeitlichen Synchronisation eingerichtet ist mit einer Korrektur von Zeitstempeln für die momentan produzierten Daten in dem Feldgerät (101); und
wobei das Feldgerät (101) zum Übertragen der komplett zu speichernden Daten an den Server (102) eingerichtet ist; und
wobei der Server (102) zur Übernahme der Daten in eine Datenbank eingerichtet ist,
und wobei der Server (102) zur Bestätigung des Datenempfangs über das Kommunikations- und Datennetz an das Feldgerät (101) eingerichtet ist; und
wobei der Server (102) zum Senden einer Serverzeit an das Feldgerät (101) und zum Auffordern zu einer zeitlichen Synchronisation des Feldgerätes (101) mit dem Server (102) eingerichtet ist; und
wobei der Server (102) einen Meldungspuffer aufweist, in dem der Server (102) den Vorgang "Zeitsynchronisation im Feldgerät" speichert.

12. Computerprogramm zur automatischen Zeitsynchronisation von Feldgeräten (101), nämlich Füllstandsmessgeräten und Druckmessgeräten, sowie Feldgerätesteuerungen (101) in einem Kommunikations- und Datennetz, wobei das Computerprogramm bei Ausführung durch einen Prozessor den Prozessor veranlasst, die folgenden Schritte auszuführen:
Bestimmen eines aktuellen Zeitwerts durch das Feldgerät (101) oder durch die Feldgerätesteuerung (101);
Bereitstellung eines Sollwertes in einem zentralen Server (102);
Vergleich des aktuellen Zeitwerts mit dem Sollwert (105), **gekennzeichnet durch** Einstellen des aktuellen Zeitwerts auf den Sollwert, wenn der Sollwert vom aktuellen Zeitwert um mehr als einen vorgegebenen Schwellwert abweicht; und
Übernehmen von Daten von dem Feldgerät (101) oder der Feldgerätesteuerung (101) durch den Server (102) in eine Datenbank nur, wenn der Sollwert vom aktuellen Zeitwert um höchstens den vorgegebenen Schwellwert abweicht.

13. Speichermedium (130), auf welchem ein Computerprogramm zur automatischen Zeitsynchronisation von Feldgeräten (101), nämlich Füllstandsmessgeräten und Druckmessgeräten, sowie Feldgerätesteuerungen in einem Kommunikations- und Datennetz gespeichert ist, wobei das Computerprogramm bei Ausführung durch einen Prozessor diesen Prozessor veranlasst, die folgenden Schritte auszuführen:
Bestimmen eines aktuellen Zeitwerts durch das Feldgerät (101) oder durch die Feldgerätesteuerung (101);
Bereitstellung eines Sollwertes in einem zentralen Server;
Vergleich des aktuellen Zeitwerts mit dem Sollwert, **gekennzeichnet durch** Einstellen des aktuellen Zeitwerts auf den Sollwert, wenn der Sollwert vom aktuellen Zeitwert um mehr als einen vorgegebenen Schwellwert abweicht; und
Übernehmen von Daten von dem Feldgerät (101) oder der Feldgerätesteuerung (101) durch den Server (102) in eine Datenbank nur, wenn der Sollwert vom aktuellen Zeitwert um höchstens den vorgegebenen Schwellwert abweicht.

14. Server (102) mit einem Mikroprozessor zur automatischen Zeitsynchronisation von Feldgeräten (101), nämlich Füllstandsmessgeräten und Druckmessgeräten, sowie Feldgerätesteuerungen in einem Kommunikations- und Datennetz und zum Ausführen der folgenden Schritte:
Bestimmen eines aktuellen Zeitwerts durch das Feldgerät (101) oder durch die Feldgerätesteuerung (101);
Bereitstellung eines Sollwertes in einem zentralen Server (102);
Vergleich des aktuellen Zeitwerts mit dem Sollwert, **gekennzeichnet durch** Einstellen des aktuellen Zeitwerts auf den Sollwert, wenn der Sollwert vom aktuellen Zeitwert um mehr als einen vorgegebenen Schwellwert abweicht; und
Übernehmen von Daten von dem Feldgerät (101) oder der Feldgerätesteuerung (101) durch den Server (102) in eine Datenbank nur, wenn der Sollwert vom aktuellen Zeitwert um höchstens den vorgegebenen Schwellwert abweicht.

## Claims

1. A method based on a communication- and data network for automatic time synchronisation of field devices, namely fill-level measuring devices and pressure measuring devices as well as field-device control units, with the method comprising the steps of:
determining a current time value by at least one of the field device (101) or the field-device control unit (101);
providing a desired value in a central server (102);
comparing the current time value with the desired value (105);
**characterized in**
setting the current time value to the desired value when the desired value differs from the current time value by more than a predetermined threshold value, and
taking over data from at least one of the field device (101) or the field-device control unit (101) by the server (102) into a database when the desired value differs from the current time value at most by the predetermined threshold value.

2. The method according to claim 1, additionally comprising the steps of:
transmitting the current time value (104) by the field device (101) to the server (102);
determining a time difference between the current time value and the desired value.

3. The method according to claim 1, further comprising the steps of:
sending a reply by the server (102) to the field device (102), stating that the system time of the field device (101) is OK (117) if the desired value differs from the current time value at most by the predetermined threshold value;
transmitting all the data to be stored from the field device (101) to the server (102);
acknowledging receipt of the data (112) by the server (102).

4. The method according to claim 1, additionally comprising the steps of:
transmitting a server time to the field device (101), and issuing a request for time synchronisation of the field device (101) with the server (102);
storing the process of "Time synchronisation in the field device" in a message buffer on the server (118).

5. The method according to claim 1, additionally comprising the step of:
requesting the field device (101) by the server (102) to carry out a clock comparison (114).

6. The method according to claim 1, additionally comprising the step of:
enabling the server (102) to take over the data only if it has been ensured that the time in the server (102) and the time in the field device (101) are identical.

7. The method according to claim 1,
wherein all the field devices (101) obtain the time information centrally by means of the server (102).

8. The method according to claim 1,
wherein setting the current time value comprises time synchronisation of the field device (101) with correction of a real-time clock of the field device (101), and with correction of time stamps relating to data that is produced at that time in the field device (101).

9. The method according to claim 1, further comprising the following steps:
collecting various data records with associated time stamps in the field device;
changing all the time stamps in the case of time synchronisation.

10. A data- and communication-network-based measuring system for measuring a fill level or a pressure and for the automatic time synchronisation, with the measuring system comprising:
a server (102);
at least one field device (101) or one field-device control unit (101);
a communication connection between the server (102) and the at least one field device (101) for mutual data transmission;
wherein the at least one field device (101) or the field-device control unit (101) is designed to determine a current time value; and
wherein the server (102) is operable to provide a desired value in the server (102);
**characterized in that**
the server (102) is designed to set the current time value to the desired value when the desired value differs from the current time value by more than a predetermined threshold value, and
wherein the server (102) is adapted to transfer data from the field device (101) or the field-device control unit (101) in a database only if the desired value deviates from the current time value by at most the predetermined threshold value.

11. The measuring system according to claim 10,
wherein the field device (101) is operable to generate time comparison data; and
wherein the field device (101) is operable to transmit time comparison data to the server (102); and
wherein the server (102) is operable to provide a threshold value relating to an allowed time difference; and
wherein the server (102) is operable to determine a time difference between the current time value and the desired value; and
wherein the server (102) is operable to compare the time difference with the threshold value; and
wherein the server (102) is operable to decide whether the time difference is greater than or smaller than the threshold value; and
wherein the server (102) is operable to send a reply to the field device (101), in which reply the field device is informed that the time of the field device (101) is OK; and
wherein the field device (101) is operable to carry out time synchronisation with a correction of time stamps of data produced at that moment being carried out in the field device (101); and
wherein the field device (101) is operable to transmit to the server the data which is to be stored completely; and
wherein the server (102) is operatable to take over the data into a database; and
wherein the server (102) is operatable to acknowledge data receipt by way of the communication- and data network to the field device (101); and
wherein the server (102) is operatable to send a server time to the field device (101) and to request time synchronisation of the field device (101) with the server (102); and
wherein the server (102) comprises a message buffer in which the server (102) stores the process of "Time synchronisation in the field device".

12. A computer program for automatic time synchronisation of field devices (101), namely fill-level measuring devices and pressure measuring devices as well as field-device control units (101) in a communication- and data network, wherein the computer program when executed on a processor causes the processor to carry out the following steps:
determining a current time value by at least one of the field device (101) or the field-device control unit (101);
providing a desired value in a central server (102);
comparing the current time value with the desired value (105);
**characterized in**
setting the current time value to the desired value when the desired value differs from the current time value by more than a predetermined threshold value; and
taking over data from at least one of the field device (101) or the field-device control unit (101) by the server (102) into a database when the desired value differs from the current time value at most by the predetermined threshold value.

13. A storage medium (130) on which a computer program for automatic time synchronisation of field devices (101), namely fill-level measuring devices and pressure measuring devices as well as field-device control units in a communication- and data network is stored, wherein the computer program when executed on a processor causes said processor to carry out the following steps:
determining a current time value by at least one of the field device (101) or the field-device control unit (101);
providing a desired value in a central server;
comparing the current time value with the desired value;
**characterized in**
setting the current time value to the desired value when the desired value differs from the current time value by more than a predetermined threshold value; and
taking over data from at least one of the field device (101) or the field-device control unit (101) by the server (102) into a database when the desired value differs from the current time value at most by the predetermined threshold value.

14. A server (102) with a microprocessor for the automatic time synchronisation of field devices (101), namely fill-level measuring devices and pressure measuring devices as well as field-device control units in a communication- and data network, and for carrying out the following steps:
determining a current time value by at least one of the field device (101) or the field-device control unit (101);
providing a desired value in a central server (102);
comparing the current time value with the desired value;
**characterized in**
setting the current time value to the desired value when the desired value differs from the current time value by more than a predetermined threshold value, and
taking over data from at least one of the field device (101) or the field-device control unit (101) by the server (102) into a database when the desired value differs from the current time value at most by the predetermined threshold value.

## Revendications

1. Procédé basé sur un réseau de communication et de données pour la synchronisation temporelle automatique d'appareils de terrain, à savoir des appareils de mesure de niveau de remplissage et des appareils de mesure de pression, ainsi que de commandes d'appareil de terrain, le procédé comportant les étapes consistant à :
déterminer une valeur temporelle actuelle par l'appareil de terrain (101) ou par la commande d'appareil de terrain (101),
fournir une valeur de consigne dans un serveur central (102),
comparer la valeur temporelle actuelle à la valeur de consigne (105),
**caractérisé par** les étapes consistant à :
fixer la valeur temporelle actuelle à la valeur de consigne lorsque la valeur de consigne s'écarte de la valeur temporelle actuelle de plus d'une valeur de seuil prescrite, et
transférer des données provenant de l'appareil de terrain (101) ou de la commande d'appareil de terrain (101) via le serveur (102) dans une base de données uniquement lorsque la valeur de consigne s'écarte de la valeur temporelle actuelle au plus de la valeur de seuil prescrite.

2. Procédé selon l'une des revendications précédentes, comportant de plus les étapes consistant à :
envoyer la valeur temporelle actuelle (104) par l'appareil de terrain (101) au serveur (102),
déterminer la différence de temps entre la valeur temporelle actuelle et la valeur de consigne.

3. Procédé selon l'une des revendications précédentes, comportant en outre les étapes consistant à :
envoyer une réponse à l'appareil de terrain (101) via le serveur (102) indiquant que le temps système de l'appareil de terrain (101) est acceptable (117) lorsque la valeur de consigne s'écarte de la valeur temporelle actuelle au plus de la valeur de seuil prescrite,
transférer toutes les données à enregistrer de l'appareil de terrain (101) au serveur (102),
confirmer la réception des données (112) par le serveur (102).

4. Procédé selon l'une des revendications précédentes, comportant de plus les étapes consistant à :
envoyer un temps de serveur à l'appareil de terrain (101) et demander une synchronisation temporelle de l'appareil de terrain (101) avec le serveur (102),
enregistrer le processus de "synchronisation temporelle dans l'appareil de terrain" dans une mémoire tampon de communication sur le serveur (118).

5. Procédé selon l'une des revendications précédentes, comportant de plus l'étape consistant à :
demander une comparaison d'horloge (114) à l'appareil de terrain (101) via le serveur (102).

6. Procédé selon l'une des revendications précédentes, comportant de plus l'étape consistant à :
permettre au serveur (102) de transférer les données uniquement après confirmation que les temps dans le serveur (102) et l'appareil de terrain (101) sont identiques.

7. Procédé selon l'une des revendications précédentes,
dans lequel tous les appareils de terrain (101) obtiennent les informations de temps de manière centralisée en utilisant le serveur (102).

8. Procédé selon l'une des revendications précédentes,
dans lequel la définition de la valeur temporelle actuelle comprend la synchronisation temporelle de l'appareil de terrain (101) avec une correction d'une horloge en temps réel de l'appareil de terrain (101) et avec une correction d'horodatages pour les données produites instantanément dans l'appareil de terrain (101).

9. Procédé selon l'une des revendications précédentes, comportant en outre les étapes suivantes consistant à :
collecter différents ensembles de données avec des horodatages associés dans l'appareil de terrain,
changer tous les horodatages lors d'une synchronisation temporelle.

10. Système de mesure basé sur un réseau de communication et de données pour mesurer un niveau de remplissage ou une pression et pour la synchronisation temporelle automatique, le système de mesure comportant :
un serveur (102),
au moins un appareil de terrain (101) ou une commande d'appareil de terrain (101),
une liaison de communication entre le serveur (102) et le au moins un appareil de terrain (101) pour un transfert de données mutuel,
dans lequel le au moins un appareil de terrain (101) ou la commande d'appareil de terrain (101) est configurée pour déterminer une valeur temporelle actuelle, et
dans lequel le serveur (102) est conçu de manière à fournir une valeur de consigne dans le serveur (102),
**caractérisé en ce que**
le serveur (102) est configuré pour fixer la valeur temporelle actuelle à la valeur de consigne lorsque la valeur de consigne s'écarte de la valeur temporelle actuelle de plus d'une valeur de seuil prescrite, et
dans lequel le serveur (102) est configuré pour transférer les données de l'appareil de terrain (101) ou de la commande d'appareil de terrain (101) dans une base de données uniquement lorsque la valeur de consigne s'écarte de la valeur temporelle actuelle au plus de la valeur de seuil prescrite.

11. Système de mesure selon la revendication 10,
dans lequel l'appareil de terrain (101) est configuré pour générer des données de comparaison de temps, et
dans lequel l'appareil de terrain (101) est configuré pour envoyer les données de comparaison de temps au serveur (102), et
dans lequel le serveur (102) est configuré pour fournir une valeur de seuil concernant l'écart de temps admis, et
dans lequel le serveur (102) est configuré pour déterminer la différence de temps entre la valeur temporelle actuelle et la valeur de consigne, et
dans lequel le serveur (102) est configuré pour comparer la différence de temps avec la valeur de seuil, et
dans lequel le serveur (102) est configuré pour décider si la différence de temps est supérieure ou inférieure à la valeur de seuil, et
dans lequel le serveur (102) est configuré pour envoyer une réponse à l'appareil de terrain (101) indiquant que le temps de l'appareil de terrain (101) est acceptable, et
dans lequel l'appareil de terrain (101) est configuré pour une synchronisation temporelle avec une correction d'horodatages pour les données produites instantanément dans l'appareil de terrain (101), et
dans lequel l'appareil de terrain (101) est configuré pour transmettre au serveur (102) toutes les données à enregistrer, et
dans lequel le serveur (102) est configuré pour transférer les données dans une base de données, et
dans lequel le serveur (102) est configuré pour confirmer à l'appareil de terrain (101) la réception de données par le réseau de communication et de données, et
dans lequel le serveur (102) est configuré pour envoyer un temps de serveur à l'appareil de terrain (101) et pour demander une synchronisation temporelle de l'appareil de terrain (101) avec le serveur (102), et
dans lequel le serveur (102) comporte une mémoire tampon de communication, dans laquelle le serveur enregistre le processus de "synchronisation temporelle dans l'appareil de terrain".

12. Programme informatique pour la synchronisation temporelle automatique d'appareils de terrain (101), à savoir des appareils de mesure de niveau de remplissage et des appareils de mesure de pression, ainsi que de commandes d'appareil de terrain (101) dans un réseau de communication et de données, dans lequel le programme informatique, lorsqu'il est exécuté par un processeur, amène ledit processeur à exécuter les étapes suivantes consistant à :
déterminer une valeur temporelle actuelle par l'appareil de terrain (101) ou par la commande d'appareil de terrain (101),
fournir une valeur de consigne dans un serveur central (102),
comparer la valeur temporelle actuelle à la valeur de consigne (105),
**caractérisé par** les étapes consistant à :
fixer la valeur temporelle actuelle à la valeur de consigne lorsque la valeur de consigne s'écarte de la valeur temporelle actuelle de plus d'une valeur de seuil prescrite, et
transférer les données de l'appareil de terrain (101) ou de la commande d'appareil de terrain (101) via le serveur (102) dans une base de données uniquement lorsque la valeur de consigne s'écarte de la valeur temporelle actuelle au plus de la valeur de seuil prescrite.

13. Support d'enregistrement (130) sur lequel est enregistré un programme informatique pour la synchronisation temporelle automatique d'appareils de terrain (101), à savoir des appareils de mesure de niveau de remplissage et des appareils de mesure de pression, ainsi que de commandes d'appareil de terrain dans un réseau de communication et de données, dans lequel le programme informatique, lorsqu'il est exécuté par un processeur, amène ledit processeur à exécuter les étapes suivantes consistant à :
déterminer une valeur temporelle actuelle par l'appareil de terrain (101) ou par la commande d'appareil de terrain (101),
fournir une valeur de consigne dans un serveur central,
comparer la valeur temporelle actuelle à la valeur de consigne,
**caractérisé par** les étapes consistant à :
fixer la valeur temporelle actuelle à la valeur de consigne lorsque la valeur de consigne s'écarte de la valeur temporelle actuelle de plus d'une valeur de seuil prescrite, et
transférer les données de l'appareil de terrain (101) ou de la commande d'appareil de terrain (101) via le serveur (102) dans une base de données uniquement lorsque la valeur de consigne s'écarte de la valeur temporelle actuelle au plus de la valeur de seuil prescrite.

14. Serveur (102) ayant un microprocesseur pour une synchronisation temporelle automatique d'appareils de terrain (101), à savoir des appareils de mesure de niveau de remplissage et des appareils de mesure de pression, ainsi que de commandes d'appareil de terrain dans un réseau de communication et de données et pour exécuter les étapes suivantes consistant à :
déterminer une valeur temporelle actuelle par l'appareil de terrain (101) ou la commande d'appareil de terrain (101),
fournir une valeur de consigne dans un serveur central (102),
comparer la valeur temporelle actuelle à la valeur de consigne,
**caractérisé par** les étapes consistant à :
fixer la valeur temporelle actuelle à la valeur de consigne lorsque la valeur de consigne s'écarte de la valeur temporelle actuelle de plus d'une valeur de seuil prescrite, et
transférer les données de l'appareil de terrain (101) ou de la commande d'appareil de terrain (101) via le serveur (102) dans une base de données uniquement lorsque la valeur de consigne s'écarte de la valeur temporelle actuelle au plus de la valeur de seuil prescrite.
